# EUROPEAN PATENT APPLICATION

(11) **EP 0 569 789 A1**
(43) Date of publication of application: **18.11.1993**
(21) Application number: 93106969.4
(22) Date of filing: 29.04.1993
(51) Int. Cl.: F16D 23/06

(54) **A synchronizer for motor-vehicle gearboxes with permanently meshed gears**

(30) Priority: 11.05.1992 IT TO920399
(71) Applicant: FIAT AUTO S.p.A., I-10135 Torino (IT)
(72) Inventor: Ghione, Ferruccio, I-10135 Torino (IT)
(74) Representative: Quinterno, Giuseppe

(57) **Abstract**

In a synchronizer for motor-vehicle gearboxes with permanently meshed gears, a resilient member (17) is interposed between the synchronizer ring (14) and the ring of frontal-engagement dogs (4) on the gear (2) and normally tends to disengage the internal conical surface (16) of the synchronizer ring (14) from the external conical surface (6) of the gear (2) and to keep the external teeth (15) of the synchronizer ring (14) permanently meshed with the splined internal profile (11) of the slidable operating sleeve (10).

## Description

The present invention relates to synchronizers for motor-vehicle gearboxes with permanently meshed gears, in which a gear mounted idly on a shaft of the gearbox can be coupled for rotation with the shaft by means of a slidable operating sleeve having an axially splined internal surface for engaging a ring of frontal-engagement dogs carried by the gear, and in which a synchronizer ring disposed between the gear and the operating sleeve has an external set of teeth which cooperate with the internal splines of the operating sleeve and an internal conical surface which can be coupled with an axial protrusion of the gear having a complementary external conical surface.

Synchronizers of this type, particularly when they are used with transverse gearboxes in which the main shaft and the layshaft are superposed, have the disadvantage that they make a considerable and annoying amount of noise, particularly when operating under cold conditions, especially as regards gear parts which are mounted on the main shaft. In fact in these conditions, the synchronizer rings, which are subject to vibrations and to axial movements although these are slight, give rise to knocking between the facing conical surfaces of the synchronizer rings and the axial protrusion of the respective gears before the lubricating oil can spray the main shaft effectively. The resulting noise is particularly noticeable in the case of the driving gear corresponding to the highest ratio (fifth gear) in the arrangement in which this gear is mounted on the inner end of the main shaft of the gearbox and is associated with its own operating sleeve which is independent of the other gears.

The object of the present invention is to overcome this problem in a simple, economic and functional manner.

According to the invention, this object is achieved by virtue of the fact that a resilient axial thrust member is interposed between the synchronizer ring and the ring of frontal-engagement dogs on the gear and tends to disengage the internal conical surface of the synchronizer ring from the external conical surface of the protrusion of the gear and to keep the external teeth of the synchronizer ring meshed with the internal splined surface of the operating sleeve.

By virtue of this concept, the synchronizer ring is kept centered in the operating sleeve, and this prevents knocking between the facing conical surfaces of the synchronizer ring and of the axial protrusion of the gear in operation, eliminating the problems of noise even when the gearbox is operating cold.

According to a preferred embodiment of the invention, the resilient member is constituted by a crinkle washer.

The invention will now be described in detail with reference to the appended drawings, provided purely by way of non-limiting example, in which:
Figure 1 is a schematic axial section of a portion of a motor-vehicle gearbox with a synchronizer according to the invention,
Figure 2 is a side elevational view of a detail of the synchronizer, and
Figure 3 is a front elevational view taken on the arrow III of Figure 2.

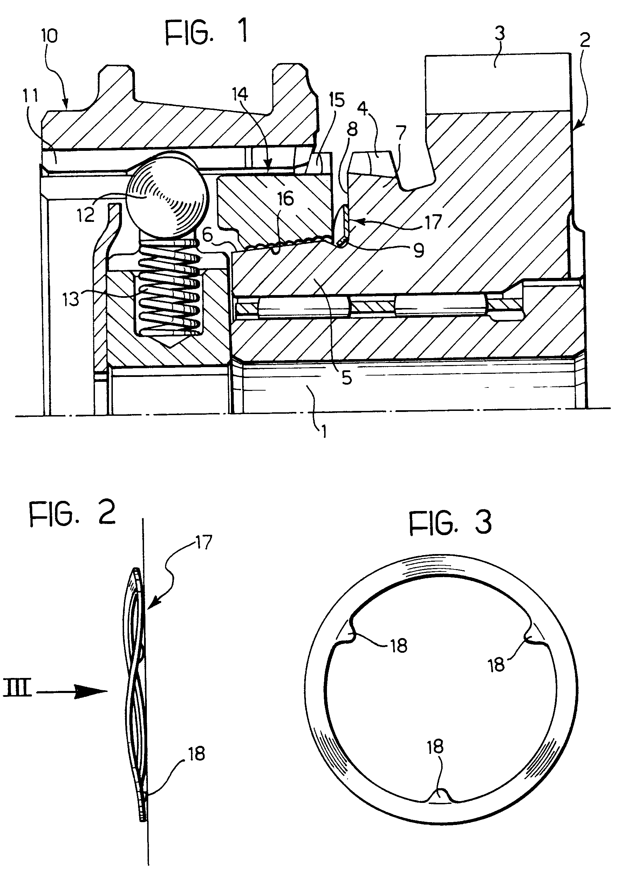

With reference initially to Figure 1, the inner end of the main shaft of a motor-vehicle gearbox with permanently-meshed gears is indicated 1 and a driving gear 2 for the fifth gear ratio is mounted idly thereon.

The gear 2 has a set of teeth 3 permanently meshed with a corresponding set of teeth of a driven gear (not shown) connected for rotation with the layshaft of the gearbox, and a ring of pointed frontal-engagement dogs 4 adjacent an axial protrusion 5 with a conical outer surface 6.

The frontal engagement dogs 4 are formed on an annular collar 7 of the gear 2 which, on its side next to the axial protrusion 5, defines a shoulder 8 which is connected to the conical surface 6 by means of an annular groove 9.

An operating sleeve, indicated 10, is coupled for rotation with the main shaft 1 and is slidable axially thereon and has an internal surface with axial splines 11 having pointed ends for engaging the ring of engagement dogs 4 of the gear 2, in conventional manner.

Balls 12, which are acted on in conventional manner by radial springs 13, tend to oppose the axial sliding of the operating sleeve 10 from its disengaged position, shown in Figure 1, towards its engaged position which corresponds to the engagement of the splines 11 with the ring of dogs 4, which corresponds to the coupling of the gear 2 for rotation with the shaft 1.

A synchronizer ring, indicated 14, has an external ring of teeth 15, which are also pointed, for cooperating with the splines 11 of the operating sleeve 10 in known manner, and an internal conical surface 16 facing the external conical surface 6 of the axial protrusion 5 of the gear 2.

According to the invention, the synchronizer ring 14 is subject to the action of an axial thrust spring 17 which normally tends to disengage the internal conical surface 16 from the external conical surface 6 and to keep the external teeth 15 of the synchronizer ring 14 meshed with the internal splines 11 of the operating sleeve 10.

As shown in detail in Figures 2 and 3, the spring 17 is constituted by an annular crinkle washer which bears against the shoulder 8 of the gear 2 on one side and against the side of the synchronizer ring 14 which faces it on the other side. The washer 17 has a set of internal locating appendages 18 (in the embodiment illustrated there are three equiangularly spaced appendages) which are bent diagonally and engaged in the peripheral groove 9 of the gear 2.

In operation, when the operating sleeve 10 is in the disengaged position shown in Figure 1, the spring 17 keeps the synchronizer ring 14 centered in the sleeve 10 by virtue of the meshing of the splined profile 11 and the teeth 15, thus preventing knocking between the conical surfaces 16 and 6. This eliminates problems of noise of the synchronizer even when the gearbox is operating cold.

When the operating sleeve 10 is made to slide into engagement, the synchronizer ring 14 advances against the action of the spring 17 thus bringing the conical surfaces 16 and 6 into engagement in conventional manner, so as to bring the gear 2 to the same speed of rotation as the sleeve 10, and thus to enable the splined profile 11 and the dogs 4 to be coupled frontally without difficulty.

Naturally, the details of construction and forms of embodiment may be varied widely with respect to those described and illustrated, without thereby departing from the scope of the present invention.

## Claims

1. A synchronizer for motor-vehicle gearboxes with permanently-meshed gears, in which a gear (2) mounted idly on a shaft of the gearbox (1) can be coupled for rotation with the shaft (1) by means of a slidable operating sleeve (10) having an axially splined internal surface (11) for engaging a ring of frontal-engagement dogs (4) carried by the gear (2), and in which a synchronizer ring (14) disposed between the gear (2) and the operating sleeve (10) has an external set of teeth (15) which cooperate with the internal splined surface (11) of the operating sleeve (10) and an internal conical surface (16) which can be coupled with an axial protrusion (5) of the gear (2) having a complementary external conical surface (6), characterised in that a resilient axial thrust member (17) is interposed between the synchronizer ring (14) and the ring of frontal-engagement dogs (4) on the gear (2) and tends to disengage the internal conical surface (16) of the synchronizer ring (14) from the external conical surface (6) of the axial protrusion (5) of the gear (2) and to keep the external teeth (15) of the synchronizer ring (14) meshed with the internal splined surface (11) of the operating sleeve (10).

2. A synchronizer according to Claim 1, characterized in that the resilient member is constituted by a crinkle washer (17).

3. A synchronizer according to Claim 2, in which the gear (2) has a peripheral annular groove (9) between the ring of frontal-engagement dogs (4) and the protrusion (5) with the conical outer surface (6), characterized in that the crinkle washer (17) has internal locating appendages (18) engaged in the peripheral groove (9).
